Europäisches Patentamt

European Patent Office

Office européen des brevets

(19)

(11) **EP 1 515 426 B1**

(12) **FASCICULE DE BREVET EUROPEEN**

(45) Date de publication et mention
de la délivrance du brevet:
**13.12.2006 Bulletin 2006/50**

(51) Int Cl.:
***H02P 9/30*** *(2006.01)*

(21) Numéro de dépôt: **04104353.0**

(22) Date de dépôt: **09.09.2004**

(54) **Système de génération électrique à fréquence fixe et procédé de contrôle de    celui-ci**

Elektrizitätserzeugungssystem mit fester Frequenz und Verfahren zur Steuerung desselben

Fixed frequency electric power generation system and method for controlling it

(84) Etats contractants désignés:
**AT BE BG CH CY CZ DE DK EE ES FI FR GB GR
HU IE IT LI LU MC NL PL PT RO SE SI SK TR**

(30) Priorité: **11.09.2003 FR 0350525**

(43) Date de publication de la demande:
**16.03.2005 Bulletin 2005/11**

(73) Titulaire: **AIRBUS France
31060 Toulouse (FR)**

(72) Inventeur: **Lando, Jean-Louis
09700 Saverdun (FR)**

(74) Mandataire: **Poulin, Gérard et al
BREVALEX
3, rue du Docteur Lancereaux
75008 Paris (FR)**

(56) Documents cités:
**WO-A-88/06378      GB-A- 700 036
GB-A- 975 102       JP-A- 59 011 798
US-A- 4 246 531     US-A- 4 625 160
US-A1- 2003 085 691**

**Description**

**DOMAINE TECHNIQUE**

L'invention concerne un système de génération électrique à fréquence fixe et un procédé de contrôle de celui-ci.

**ETAT DE LA TECHNIQUE ANTERIEURE**

Le domaine de l'invention est celui des systèmes de génération électrique alternative à bord des aéronefs. Mais c'est également celui de la production d'énergie électrique à partir d'une source mécanique de régime variable.
Les avions sont très souvent équipés d'alternateurs produisant du courant alternatif à fréquence constante.
L'un des principaux avantages du courant alternatif à fréquence constante par rapport au courant à fréquence variable, est sa simplicité d'emploi pour les consommateurs. Par contre, sa production nécessite une technique plus compliquée. En effet, l'obtention d'une fréquence constante oblige les constructeurs à prévoir un entraînement à vitesse constante. La fréquence constante couramment utilisée est de 400 Hz.

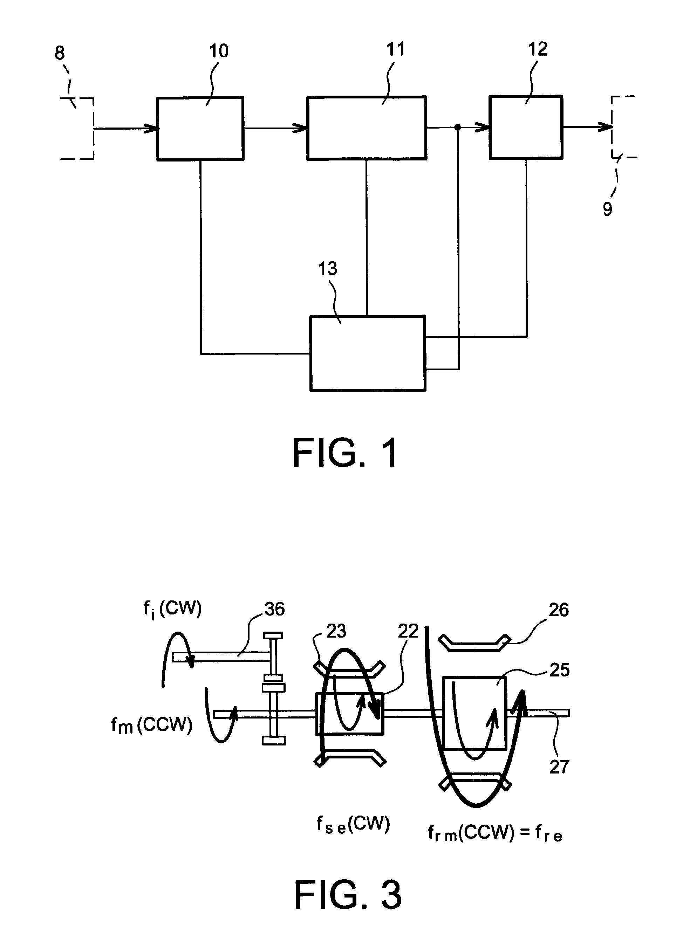

La figure 1 illustre une telle génération du courant alternatif à fréquence fixe avec :

- situés entre le moteur 8 et le bus 9 :

  • un bloc d'entraînement à vitesse constante 10,
  • un bloc d'alternateur 11,
  • un relais de ligne 12,

- et un dispositif de régulation 13 relié à chacun de ces trois éléments 10, 11, 12 et à l'entrée du relais de ligne 12.

Bloc d'entraînement à vitesse constante 10

Sur la figure 1 le bloc d'entraînement à vitesse constante 10 est distinct du bloc alternateur 11. En fait, l'ensemble de ces deux éléments constitue un tout fixé généralement dans le voisinage de la partie inférieure du moteur 8 auquel il est couplé.
Ce bloc d'entraînement à vitesse constante 10, désigné par l'appellation abrégée CSD (« Constant Speed Drive »), est un dispositif dont l'arbre d'entrée est entraîné à une vitesse variant avec le régime moteur, et dont l'arbre de sortie délivre une vitesse constante. Cet arbre de sortie entraîne donc le bloc alternateur 11 à vitesse constante et donc à fréquence constante puisque $f = p N$
avec :

    $f$ = fréquence,
    $p$ = nombre de paires de pôles de l'alternateur 11,
    $N$ = nombre de tours/seconde du rotor de l'alternateur 11.

On fixe généralement une plage de variation de la vitesse d'entrée à l'intérieur de laquelle on peut avoir en sortie une vitesse constante.
Le bloc d'entraînement à vitesse constante 10 comprend :

- un bloc cylindre,
- un différentiel hydraulique.

Le bloc cylindre est constitué d'une pompe et d'un moteur à barillets qui sont placés bout à bout. Le moteur a un plateau fixe tandis que la pompe a un plateau à inclinaison variable. Le contrôle de l'inclinaison du plateau permet de faire varier la vitesse de l'arbre du moteur ainsi que de choisir son sens de rotation.
Le différentiel hydraulique est constitué de deux planétaires et deux satellites. L'arbre d'entrée est le porteur des planétaires et entraîne en rotation la pompe hydraulique alimentant le moteur. Le moteur entraîne en rotation le satellite de réglage de vitesse. Le satellite de sortie entraîne le rotor de l'alternateur.
Lorsque la vitesse de l'arbre d'entrée varie, le plateau à inclinaison variable de la pompe est positionné de manière à ajuster la vitesse du rotor de l'alternateur en faisant varier celle du satellite de réglage. Lorsque la vitesse à l'entrée est insuffisante, on rajoute des tours/mn. Lorsque la vitesse est trop élevée, on enlève des tours/mn en inversant le sens de rotation du moteur. Lorsque le régime d'entrée est exactement celui que l'on veut, le plateau est en position verticale et le différentiel ne tourne plus.

Bloc alternateur 11

L'alternateur comprend trois appareillages accolés :

- un alternateur principal ;
- une excitatrice ;
- un générateur à aimants permanents (PMG ou « Permanent Magnet Generator »).

Le générateur PMG, l'excitatrice, et l'alternateur possèdent chacun leur propre rotor. Les trois rotors sont solidaires du même arbre et sont donc entraînés à la même vitesse.
Le rotor du générateur PMG comporte des aimants permanents. Dès que ce rotor est entraîné en rotation, on peut recueillir de l'énergie électrique aux bornes du stator sans fournir aucune excitation. Ce courant électrique redressé est envoyé, par l'intermédiaire d'un boîtier de régulation, au stator inducteur de l'excitatrice. On recueille alors aux bornes du rotor de l'excitatrice un courant alternatif qui, redressé par des diodes logées dans l'arbre d'entraînement commun (diodes tournantes), permet l'excitation de l'alternateur.

Dispositif régulateur 13

Ce régulateur de tension permet de maintenir une tension de sortie de valeur efficace constante.
L'alternateur est surexcité lorsque la tension tend à diminuer ou bien est sous-excité lorsque la tension tend à augmenter. Pour cela on compare la tension de sortie de l'alternateur à une tension de référence, l'écart est amplifié et un courant qui lui est proportionnel permet de modifier l'excitation et la force électromotrice de l'alternateur.
Différents systèmes de l'art connu permettent une génération de courant à fréquence constante. Ces systèmes présentent de nombreux inconvénients :

- Le générateur IDG (« Integrated Drive Generator ») de la société Hamilton-Sundstrand consiste en l'intégration dans une même enveloppe d'un CSD (« Constant Speed Drive ») et d'un alternateur triphasé à trois étages. Le CSD sert à réguler la vitesse mécanique pour l'entraînement de l'alternateur afin de générer une fréquence fixe de 400Hz. La valeur efficace des tensions de sortie est régulée à 115V. Ce générateur présente de nombreux inconvénients : prix d'achat élevé, coût de maintenance élevé, qualité de l'huile essentielle, masse élevée, rendement faible, fiabilité médiocre, performances dépendantes de l'état d'usure du CSD échangeur de taille importante (impact moteur), système non-réversible.
- Le générateur VSCF (« Variable Speed Constant Frequency ») de la société Hamilton-Sundstrand consiste en l'association d'un générateur VFG (« Variable Frequency Generator ») et d'un convertisseur statique d'énergie électrique de type fréquence variable/fréquence fixe. Ce système nécessite souvent la création de deux réseaux électriques : un à fréquence fixe et un à fréquence variable, afin de conserver des masses et des fiabilités raisonnables. Ce générateur présente de nombreux inconvénients : prix d'achat élevé, masse élevée due à la présence d'un convertisseur statique et lignes d'alimentation dimensionnées pour 760Hz, rendement médiocre en fréquence fixe, fiabilité faible du convertisseur statique inversement proportionnelle à la puissance, puissance faible en fréquence fixe, système non-réversible.

**EXPOSÉ DE L'INVENTION**

L'invention a pour objet de permettre une alimentation de toute charge électrique en courant sous la forme de tensions triphasées de valeur efficace constante et de fréquence constante quel que soit le régime moteur compris entre des vitesses limites, qui sont, pour un aéronef, les vitesses « Ground Idle speed » et « take-off speed », avec une meilleure fiabilité que les systèmes de l'art connu.
L'invention a également pour objet de permettre une utilisation en moteur asynchrone pour effectuer le démarrage du moteur auquel il est accouplé.
L'invention propose un système de génération électrique à fréquence fixe apte à être disposé en sortie d'un moteur à régime variable, caractérisé en ce qu'il comprend :

- un étage primaire, qui est un générateur à aimant permanents, qui fournit l'énergie audit système lui permettant d'être autonome,
- un étage secondaire, qui est une excitatrice, qui contrôle la magnétisation d'un étage tertiaire,
- cet étage tertiaire, qui est un générateur principal, qui est l'étage de puissance de production de l'énergie électrique,

et en ce que l'excitatrice et le générateur principal ont leurs rotors solidaires d'un premier arbre, le stator du générateur principal fournissant la tension de sortie, le générateur à aimants permanents a son rotor solidaire d'un second arbre, au moins une pompe à huile du circuit de refroidissement est solidaire d'un troisième arbre, ces trois arbres étant entraînés par un arbre d'entrée, qui est l'arbre du moteur, via des engrenages.

Avantageusement :

- le rotor du générateur à aimants permanents est entraîné directement (pas de CSD) par l'arbre du moteur, et son stator alimente un organe de contrôle extérieur,
- le stator de l'excitatrice est alimenté par des courants triphasés de fréquence variable provenant d'un onduleur de courant triphasé dudit organe de contrôle extérieur,
- le rotor du générateur principal est solidaire de celui de l'excitatrice et est entraîné par l'arbre du moteur, ses bobinages rotoriques triphasés étant interconnectés directement (pas de redresseur) avec ceux de l'excitatrice,

Dans un mode de fonctionnement en génératrice synchrone, l'arbre d'entrée étant entraîné en régime variable, ledit système convertit l'énergie mécanique d'entrée en énergie électrique pour la restituer sous la forme de tensions et de courants triphasés au stator de l'étage principal, qui sont distribués ensuite sur un réseau alternatif.

Dans un mode de fonctionnement en moteur asynchrone, le stator de l'étage principal est alimenté par des tensions triphasées et le stator de l'excitatrice est court-circuité, l'énergie absorbée étant électrique et l'énergie générée étant mécanique.

L'invention concerne également un procédé de contrôle dudit système dans le cas d'un fonctionnement en génératrice synchrone.

Dans un premier mode, dans lequel on contrôle la tension au stator de l'étage principal, ce procédé comprend deux boucles de régulation :

- une boucle de courant d'excitation ;
- une boucle tension de sortie.

Dans un second mode, dans lequel on contrôle la fréquence du système, ce procédé comprend :

- une boucle de fréquence d'excitation ;
- une boucle fréquence de sortie.

Le générateur de l'invention présente les caractéristiques avantageuses suivantes :

- Il ne comporte ni CSD (« constant speed drive ») ni diodes tournantes : son rotor est directement entraîné par le moteur en régime variable. Les bobinages rotoriques de l'excitatrice et du générateur principal sont directement interconnectés. Il produit une fréquence fixe.
- Le rotor du générateur principal est alimenté par des courants triphasés de fréquence variable dépendant du régime d'entraînement mécanique : le champ rotorique du générateur principal est un champ tournant par rapport à un observateur situé sur le rotor.
- L'armature statorique de l'excitatrice est alimentée par des courants triphasés de fréquence variable dépendant du régime d'entraînement mécanique. Le champ statorique de l'excitatrice est un champ tournant par rapport à un observateur situé sur le stator.
- Les courants triphasés de fréquence variable alimentant le stator de l'excitatrice sont générés par un onduleur de tension triphasé situé dans l'organe de contrôle (GCU ou « Generator Control Unit »).

Il en découle les avantages suivants :

- simplicité et bonne fiabilité,
- coût de maintenance faible,
- bon rendement,
- masse faible,
- fonctionnement en démarreur possible.

Le système de l'invention peut être utilisé dans les domaines suivants :

- génération principale, auxiliaire et dernier secours d'aéronefs,
- renouveau des flottes existantes d'aéronefs pour un gain de fiabilité et gain financier,
- ouverture à la concurrence dans le domaine des fréquences fixes.

## BRÈVE DESCRIPTION DES DESSINS

La figure 1 illustre un générateur de courant alternatif de l'art connu.

La figure 2 illustre le système de génération électrique à fréquence fixe de l'invention.

La figure 3 illustre le fonctionnement du système de l'invention.

La figure 4 illustre le fonctionnement du système de l'invention en génératrice synchrone.

La figure 5 illustre le fonctionnement du système de l'invention en moteur asynchrone.

Les figures 6 et 7 illustrent respectivement un procédé de contrôle de la tension et un procédé de contrôle de la fréquence du système de l'invention, dans le cas du fonctionnement en génératrice synchrone illustré sur la figure 4.

## EXPOSÉ DÉTAILLÉ DE MODES DE RÉALISATION PARTICULIERS

Le système de génération de fréquence fixe de l'invention est un convertisseur électromécanique qui permet d'alimenter toute charge électrique en énergie, sous la forme de tensions triphasées de valeur efficace et de fréquence constantes, à partir d'une source mécanique de régime variable.

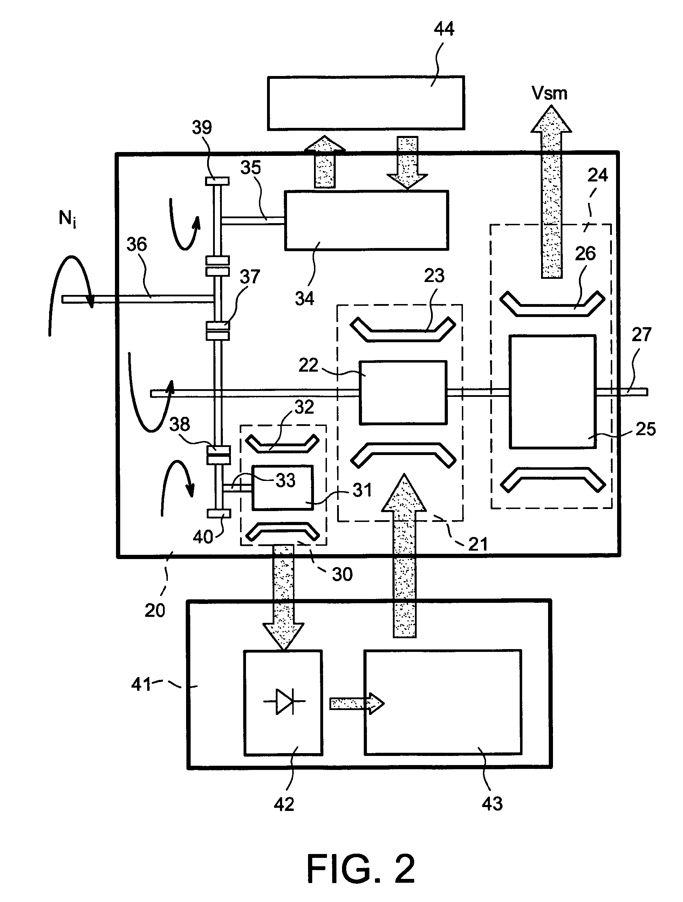

La topologie de ce système 20 est basée sur un système à trois étages, comme illustré sur la figure 2 :

- un étage primaire 30 appelé « générateur à aimants permanents » (PMG) qui fournit l'énergie électrique permettant au système d'être autonome,
- un étage secondaire d'excitation 21, appelé « excitatrice », qui sert à contrôler la magnétisation d'un étage tertiaire 24,
- cet étage tertiaire 24, appelé « générateur principal », qui est l'étage de puissance de production d'énergie électrique.

Une pompe à huile 34 reliée à un échangeur thermique 44, permet de refroidir le système.

Un jeu d'engrenages 37, 38, 39 et 40 permet d'entraîner en rotation le rotor 25 du générateur principal 24 dans un rapport adapté suivant l'application. Il en est de même en ce qui concerne l'excitatrice 21, le générateur à aimants permanents 30 ainsi que la pompe à huile 34 du circuit de refroidissement. Le système est contrôlé par un dispositif électronique « temps réel » basée sur une architecture microprocesseur ou DSP (processeur de signaux numériques).

Ce principe de générateur à trois étages permet d'éviter les liaisons de type bague ou balai dans un souci de bonne fiabilité. De plus, ce système ne comporte ni CSD (« Constant Speed Drive ») ni redresseur tournant.

Ce système 20 est tel que :

- l'excitatrice 21 et le générateur principal 24 ont leurs rotors 22 et 25 solidaires d'un premier arbre 27, le stator 26 du générateur principal 24 fournissant la tension de sortie $V_{sm}$,
- le générateur à aimants permanents 30 a son rotor 31 solidaire d'un second arbre 33,
- au moins une pompe à huile du circuit de refroidissement 34 est solidaire d'un troisième arbre 35.

Ces trois arbres 27, 33 et 35 sont entraînés par l'arbre d'entrée 36, qui est l'arbre du moteur, via les engrenages 37, 38, 39 et 40.

Un échangeur thermique 44 est relié, en entrée et en sortie, à la pompe à huile du circuit de refroidissement 34.

Un organe de contrôle 41, comprenant un élément redresseur 42 suivi d'un onduleur triphasé 43, est relié, en entrée, au stator 32 du générateur à aimant permanent 30 et, en sortie, au stator 23 de l'excitatrice 21.

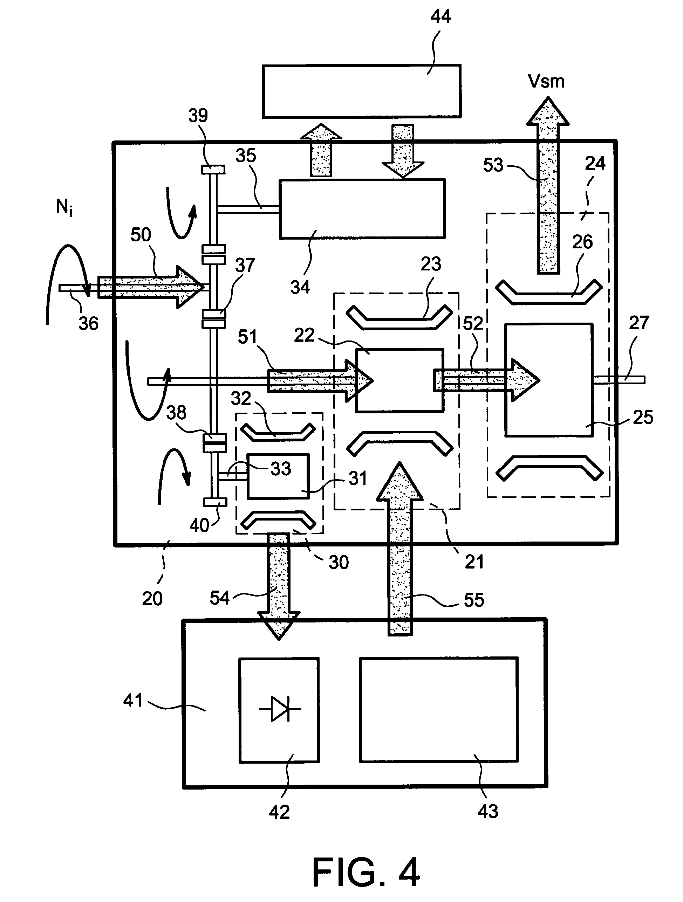

La figure 3 présente la topologie générale du système de l'invention. Pour des raisons de simplification de l'exposé, tous les bobinages sont supposés bipolaires et triphasés. Le principe reste valable dans le cas général de bobinages multipolaires et/ou polyphasés ; de même, le sens de rotation de l'arbre d'entrée peut être soit horaire (CW), soit anti-horaire (CCW). Les rotors 22 et 25 de l'excitatrice 21 et du générateur principal 24 sont solidaires de l'arbre principal 27 et portent des bobinages triphasés. Ces bobinages sont interconnectés directement. L'arbre principal 27 et l'arbre d'entrée 36 s'engrènent l'un l'autre avec un rapport de vitesses adapté à l'application. Le bobinage statorique 23 de l'excitatrice 21 sert à produire le champ d'excitation du système, le bobinage statorique 26 du générateur principal 24 est l'étage de puissance de production d'énergie électrique.

On a les grandeurs suivantes :

$f_i$ : fréquence de révolution de l'arbre d'entrée (36)

$f_m$ : fréquence de révolution de l'arbre principal (27)

$f_{re}$ : fréquence rotor excitatrice (22)

$f_{se}$ : fréquence stator excitatrice (23)

$f_{rm}$ : fréquence rotor générateur principal (25)

$f_{sm}$ :    fréquence stator générateur principal (26)

L'arbre d'entrée 36 est entraîné à régime variable dans le sens des aiguilles d'une montre (CW) à la fréquence $f_i$. En conséquence, l'arbre principal 27 tourne à la fréquence $f_m$ en sens inverse (CCW). Par hypothèse, le bobinage statorique 23 de l'excitatrice 21 est alimenté par des courants triphasés de manière à générer un champ magnétique tournant (théorème de Galileo Ferraris). Ce champ a pour fréquence instantanée $f_{se}$ et pour amplitude maximale $H_e$, celles-ci étant toutes deux contrôlées.

Pour un observateur placé sur le bobinage rotorique 22 de l'excitatrice 21, les fréquences se combinent pour donner naissance à des forces électromotrices triphasées (loi de Faraday) d'amplitude maximale $E_{re}$ proportionnelle à l'amplitude He et de fréquence $f_{re} = f_m + f_{se}$.

Par principe, les bobinages rotoriques 22 de l'excitatrice 21 sont électriquement directement interconnectés aux bobinages rotoriques 25 du générateur principal 24. Ainsi, les forces électromotrices triphasées disponibles au rotor 25 de l'excitatrice 21 donnent naissance à des courants triphasés qui traversent les bobinages rotoriques 25 du générateur principal 24. L'amplitude maximale $I_{rm}$ de ces courants est proportionnelle à l'amplitude $E_{re}$. La fréquence de ces courants $f_{rm}$ et la fréquence des forces électromotrices qui en sont à l'origine $f_{re}$ sont donc égales : $f_{rm} = f_{re}$.

Pour un observateur placé sur le rotor 25 du générateur principal 24, le rotor 25 est immobile mais il est le siège d'un champ magnétique tournant de fréquence de révolution $f_{rm}$ et d'amplitude $H_m$ proportionnelle à $I_{rm}$.

Pour un observateur placé sur le stator 26 du générateur principal 24, le rotor 25 tourne mécaniquement dans le sens inverse des aiguilles d'une montre (CCW) à une fréquence de révolution $f_m$. A ce mouvement se superpose un champ magnétique qui tourne, quant à lui, par rapport au rotor 25 également en sens inverse des aiguilles d'une montre à une fréquence $f_{rm}$. Au stator 26, le champ magnétique résultant de cette combinaison est un champ tournant en sens inverse des aiguilles d'une montre à la fréquence $f_{sm}$ égale à la somme des deux fréquences : $f_{sm} = f_m + f_{rm}$. Les bobinages statoriques 26 du générateur principal 24 sont donc le siège de forces électromotrices triphasées d'amplitude maximale $E_{sm}$ proportionnelle à $H_m$ et de fréquence $f_{sm}$.

On obtient un système de trois équations

$$f_{re} = f_m + f_{se}$$

:

$$f_{rm} = f_{re}$$

$$f_{sm} = f_m + f_{rm}$$

La solution de ce système donne :

$$f_{sm} = 2 \cdot f_m + f_{se}.$$

Par hypothèse on est capable d'asservir la fréquence de révolution $f_{se}$ du champ tournant statorique de l'excitatrice 21 selon la loi suivante : $f_{se} = f_{ref} - 2 \cdot f_m$. La fréquence $f_{ref}$ est la fréquence électrique que l'on souhaite obtenir et garder constante.

On obtient alors :

$$f_{sm} = 2 \cdot f_m + f_{se} = 2 \cdot f_m + (f_{ref} - 2 \cdot f_m) \Rightarrow f_{sm} = f_{ref}$$

Avec une telle loi d'excitation, le système de l'invention est capable de générer des forces électromotrices triphasées de valeur efficace $E_{sm}$ de fréquence constante égale à $f_{ref}$ quel que soit le régime d'entraînement $f_m$. L'écart de fréquence est compensé par un choix judicieux et un réglage en temps réel de la fréquence du champ d'excitation $f_{se}$. L'excitatrice 21 joue un rôle double : l'excitation (réglage de $E_{sm}$), et la compensation de fréquence (réglage de $f_{se}$

pour que $f_{sm} = f_{ref}$). En outre, la puissance nécessaire au niveau du stator 23 de l'excitatrice 21 est négligeable par rapport à celle que fournit l'étage de puissance (générateur principal 21), convertie depuis l'entrée mécanique.

Modes de fonctionnement

Dans la mesure où le système de l'invention ne comporte aucun élément unidirectionnel par construction (pas de diodes), il est naturellement réversible. Il existe donc deux modes de fonctionnement, en moteur et en générateur :

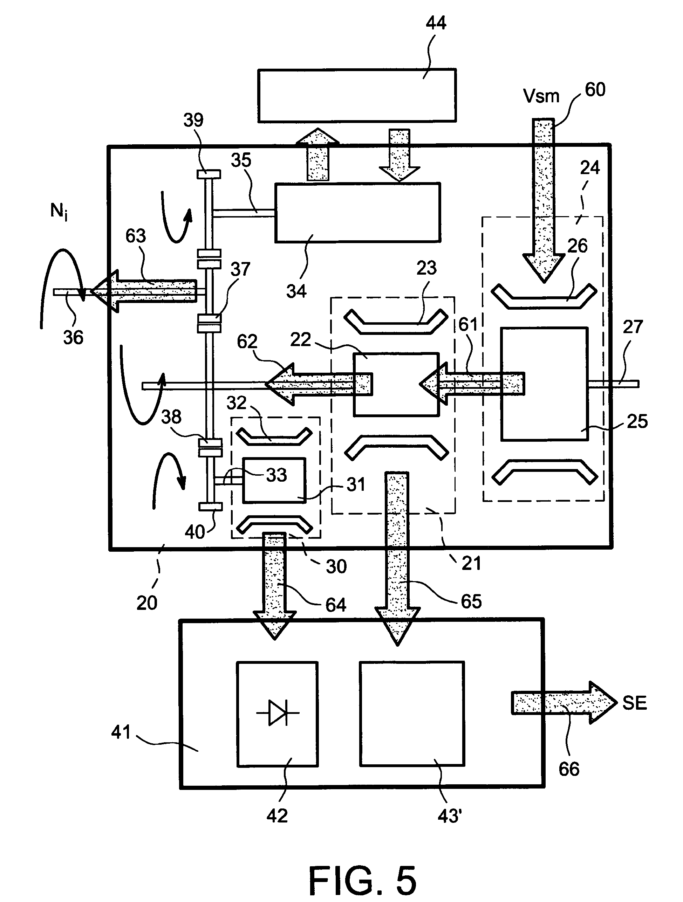

- Lorsque l'arbre mécanique 27 est entraîné en rotation et que le système est excité, l'énergie absorbée est mécanique et l'énergie générée est électrique. Trois tensions apparaissent au stator 26 de l'étage principal dont la fréquence est égale à celle du champ qui leur donne naissance. S'il y a présence de charges électriques, trois courants triphasés sont fournis par le stator 26 de l'étage principal 24 : il s'agit d'un fonctionnement en génératrice synchrone (ou alternateur), comme illustré sur la figure 4.
- Lorsque le stator 26 de l'étage principal 24 est alimenté par des tensions triphasées et que le stator 23 de l'excitatrice 21 est court-circuité, l'énergie absorbée est électrique et l'énergie générée est mécanique, le rotor 22 se met spontanément en rotation. La fréquence de rotation de l'arbre mécanique 27 est toujours inférieure ou égale à celle du champ stator : il s'agit d'un fonctionnement en moteur asynchrone, comme illustré sur la figure 5.

Le contrôle du système de l'invention est possible grâce à des équations scalaires car la fréquence des modes perturbateurs est faible devant celle des autres modes. On peut se contenter d'apporter des corrections au système sur des valeurs moyennées de grandeurs.

Dans un fonctionnement de type génératrice synchrone, les perturbations (non prévisibles) sont la fréquence $f_i$ de l'arbre d'entrée 36 et le courant de charge $I_{sm}$ du générateur 24. Les grandeurs à réguler sont la valeur efficace de la tension $V_{sm}$ et la fréquence $f_{sm}$ de l'étage de puissance du système de l'invention. Les grandeurs de contrôle sont la valeur maximale du courant d'excitation $I_{se}$ et sa fréquence $f_{se}$. Dans un tel dispositif, les perturbations sont « lentes » devant les grandeurs à réguler. En effet, dans une application aéronautique, l'inertie mécanique du réacteur est grande et la fréquence mécanique $f_i$ de l'arbre d'entrée 36 varie lentement par rapport aux autres grandeurs. D'autre part, à cause des effets inductifs du réseau électrique, les variations des courants de charge restent « lentes ».

• Fonctionnement en génératrice synchrone

Dans un fonctionnement en génératrice synchrone, comme illustré sur la figure 4, le sens du transfert de l'énergie est indiqué à l'aide des flèches 50 à 55. L'arbre d'entrée 36 est entraîné en régime variable par une source d'énergie mécanique (boîte à accessoires du réacteur). Cette énergie mécanique est convertie en énergie électrique par le système de l'invention, qui la restitue sous la forme de tensions et de courants triphasés au stator 26 de l'étage principal 24, et qui sont distribués ensuite sur le réseau alternatif (3x115V-AC/400Hz). Le contrôle de la valeur efficace et de la fréquence de ces tensions est obtenu par une action sur le courant d'excitation $I_{se}$. Le stator 23 de l'excitatrice 21 est alimenté par un onduleur triphasé 43 qui permet de contrôler en temps réel l'amplitude maximale du courant d'excitation $I_{se}$ ainsi que sa fréquence instantanée $f_{se}$. Les sources d'énergie servant à l'alimentation de l'ensemble des dispositifs électroniques de contrôle, y compris la source de tension primaire E de l'onduleur 4 3, sont fournies de façon autonome à partir du générateur PMG 30 et de dispositifs redresseurs 42 au niveau du calculateur de contrôle 41.

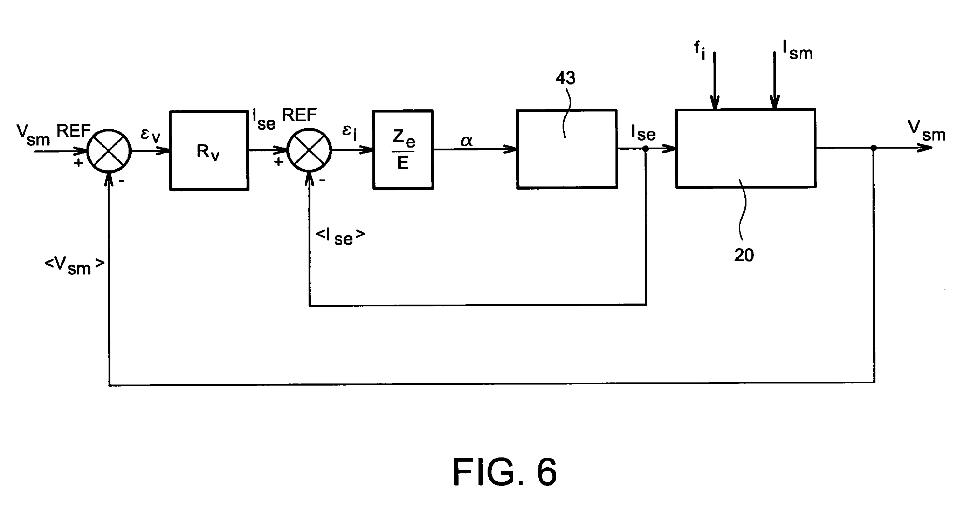

La figure 6 représente un schéma -bloc en boucle fermée d'un procédé de contrôle de la tension $V_{sm}$ du système à contrôler, qui est en fait constitué de deux sous-systèmes : le générateur électrique 20 et l'onduleur triphasé 43 qui l'alimente.

Pour le sous-système « générateur » 20, la grandeur de sortie à contrôler est la tension $V_{sm}$ au stator 26 de l'étage principal 24, alors que la grandeur de contrôle à l'entrée est la valeur maximale $I_{se}$ du courant au stator 23 de l'excitatrice 21. Deux autres grandeurs interviennent au sein de ce sous-système 20 : la fréquence $f_i$ de rotation mécanique de l'arbre d'entrée 36 et le courant de charge $I_{sm}$ du générateur 24. Ces deux dernières grandeurs peuvent être mesurées mais ne peuvent pas être contrôlées : il s'agit de perturbations.

Pour le sous-système « onduleur » 4 3, la grandeur de sortie à contrôler est le courant d'excitation $I_{se}$ à l'entrée de l'excitatrice 21 alors que la grandeur de contrôle à l'entrée est le rapport cyclique $\alpha$ de l'onduleur 43 (par exemple $0 \leq \alpha \leq +1$). La perturbation de ce sous-système est la tension d'alimentation E de l'onduleur 43 qui, étant produite à fréquence variable par l'étage PMG 30, va dépendre du régime d'entraînement et, par conséquent, ne peut pas être contrôlée.

Le procédé de contrôle de la tension $V_{sm}$ est constitué de deux boucles de régulation : une boucle « courant d'excitation : $I_{se}$ » et une boucle « tension de sortie $V_{sm}$ ».

Concernant la boucle « $I_{se}$ », le rapport cyclique $\alpha$ est calculé à partir de la différence instantanée $\varepsilon i$ entre le courant d'excitation de référence Ise REF et le courant d'excitation « $I_{se}$ » réel mesuré par un capteur. Dans cette boucle,

**EP 1 515 426 B1**

les paramètres de calcul sont l'impédance d'entrée $Z_e$ du stator 23 de l'excitatrice 21 et la tension d'alimentation E de l'onduleur 43.

Concernant la boucle « $V_{sm}$ », le courant de référence $I_{se}$ REF de l'onduleur 43 est calculé à partir de la différence instantanée $\varepsilon_v$ entre la tension de référence $V_{sm}$ REF (par exemple 115V) et la tension de sortie réelle « $V_{sm}$ » mesurée au moyen d'un capteur. Les performances du procédé sont ajustées au moyen du bloc Rv (réseau correcteur).

Ce procédé permet d'obtenir une tension de sortie $V_{sm}$ qui est maintenue égale à la tension de référence $V_{sm}$ REF quel que soit l'état des perturbations extérieures fi et $I_{sm}$.

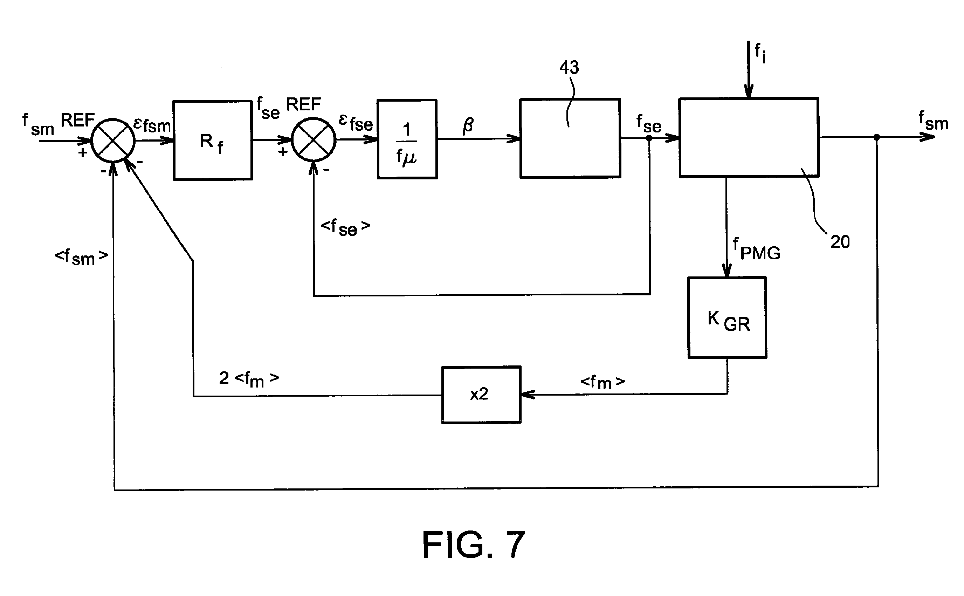

La figure 7 représente un schéma-bloc en boucle fermée (BF) d'un procédé de contrôle de la fréquence $f_{sm}$ du système à contrôler. Comme précédemment, le système à contrôler est constitué des deux sous-systèmes « générateur » 20 et « onduleur » 43.

Pour le sous-système « générateur » 20 la grandeur de sortie à contrôler est la fréquence $f_{sm}$ au stator 26 de l'étage principal 24 alors que la grandeur de contrôle à l'entrée est la fréquence $f_{se}$ du courant au stator 23 de l'étage excitatrice 21. La perturbation de ce sous-système 20 est la fréquence de rotation mécanique $f_i$ de l'arbre d'entrée 36.

Pour le sous-système « onduleur » 43, la grandeur de sortie à contrôler est la fréquence $f_{se}$ du courant d'excitation à l'entrée de l'excitatrice 21 alors que la grandeur de contrôle à l'entrée est le rapport de modulation $\beta$ de l'onduleur 43 (par exemple $-0,25 \leq \beta \leq +1,25$). Ce paramètre $\beta$ est égal au rapport de la fréquence d'excitation instantanée $f_{se}$ à la fréquence de modulation $f_{\mu}$ ($f_{\mu} = f_{se}(n_i = idle)$).

Le procédé de contrôle de la fréquence $f_{sm}$ est constitué de deux boucles de régulation : une boucle « fréquence d'excitation : $f_{se}$ » et une boucle double « fréquence de sortie : $f_{sm}$ ».

Concernant la boucle « $f_{se}$ », le rapport de modulation $\beta$ est calculé à partir de la différence instantanée $\varepsilon f_{se}$ entre la fréquence d'excitation de référence $f_{se}REF$ et la fréquence du courant d'excitation $<f_{se}>$ calculée à partir de la mesure en temps réel de $I_{se}$ (procédé de contrôle de tension). Dans cette boucle, le paramètre de calcul est la fréquence de modulation $f_{\mu}$.

Concernant la boucle « $f_{sm}$ », la fréquence de référence $f_{se}REF$ de l'onduleur est calculée à partir de la différence instantanée $\varepsilon f_{sm}$ entre la fréquence de référence $f_{se}REF$ entre (par exemple 400Hz), le double 2 x <fm> de la fréquence instantanée de rotation mécanique du rotor (mesurée à partir des tensions fournies par l'étage PMG 30 et du rapport d'engrenages $K_{GR}$) et, enfin, la fréquence de sortie réelle <fsm> du générateur 24 calculée à partir de la mesure en temps réel de $V_{sm}$ (procédé de contrôle de tension). Les performances du système sont ajustées au moyen du bloc $R_F$ (réseau correcteur).

Ce procédé de contrôle de la fréquence permet d'obtenir une fréquence de sortie $f_{sm}$ qui est maintenue égale à la fréquence de référence $f_{sm}REF$ quel que soit l'état de la perturbation extérieure $f_i$.

• Fonctionnement en moteur asynchrone

Dans un fonctionnement en moteur asynchrone, comme illustré sur la figure 5, le sens de transfert de l'énergie est indiqué à l'aide des flèches 60 à 66. Il est inversé par rapport à un fonctionnement en générateur. Le stator 26 de l'étage principal 24 est alimenté par un système de tensions triphasées provenant d'une source de puissance électrique externe au dispositif (3x115V-AC/400Hz : groupe de parc ou générateur APU). Une partie de l'énergie électrique ainsi injectée dans le système 20 est extraite au stator 23 de l'excitatrice 21 sous la forme de courants triphasés. Cette énergie peut soit être dissipée sous forme d'effet Joule (solution triviale), soit être convertie et réinjectée sur une source électrique réversible SE (par exemple : réseau continu 28V-DC), de façon contrôlée, au moyen d'un convertisseur statique de faible puissance. Le reste de l'énergie, c'est-àdire la plus grande partie, est converti sous forme mécanique par la mise en rotation de l'arbre d'entrée 36. Dans le cas de récupération sur un réseau continu, le contrôle du rapport cyclique $\gamma$ du hacheur 43' permet de maîtriser le courant d'appel $I_{sm}$ sur la source de puissance externe pendant la séquence de démarrage.

Exemples d'utilisations du système de l'invention

Le système de l'invention peut être utilisé, notamment sur un aéronef comme générateur principal, auxiliaire et/ou comme générateur de dernier secours.

Par exemple le système de l'invention peut être monté sur la boîte à accessoires d'un turbo-fan dont le régime sur l'arbre d'entrée du générateur varie de 4500 RPM (ralenti moteur au sol, $f_i = 75Hz$) à 9000 RPM (fréquence maximale au décollage, $f_i = 150Hz$). Par un rapport d'engrenages de 1.333, on obtient une fréquence mécanique au rotor 25 du système telle que : $100Hz \leq f_m \leq 200$ Hz en régime normal.

Si on choisit de générer des tensions à une fréquence de $f_{sm} = 400$ Hz, la loi de contrôle de l'excitation doit être la suivante :

- au ralenti moteur ($f_m = 100Hz$) : $f_e = 200Hz$

- au décollage ($f_m$ = 200 Hz) : $f_e$ = O Hz
- a un régime donné entre 4500 et 9000 RPM ($f_m$ = 400 ψ ; 0,25 ≤ ψ 0,50) : $f_e$ = 400 (1-2 ψ).

Cette loi d'excitation permet bien de générer une fréquence de 400Hz constante sur l'intervalle 4500-9000 RPM.

• Génération principale

S'il est utilisé en générateur principal, le système de l'invention est accouplé à la boîte à accessoires et est entraîné mécaniquement par le moteur. En fonctionnement normal, le système de l'invention se comporte comme une génératrice synchrone (alternateur triphasé).

Si pour une raison quelconque, le régime d'entraînement venait à dépasser le seuil de 9000 RPM (« engine over-speed »), le système de l'invention reste contrôlable à condition d'inverser le sens de rotation du champ d'excitation (fse < 0) pour ralentir le champ $H_m$, par rapport à la fréquence du rotor 25.

Dans la mesure où le système de l'invention est réversible de par sa configuration (pas d'élément unidirectionnel), il peut être utilisé en moteur électrique pour démarrer le moteur de l'aéronef. Pour obtenir un mode de fonctionnement en moteur asynchrone, le stator 23 de l'excitatrice 21 doit être court-circuité de façon contrôlée, ou bien on doit transférer de l'énergie sur le réseau électrique de façon contrôlée au moyen d'un convertisseur statique. D'autre part, le stator 26 du générateur principal 24 doit être alimenté par le réseau alternatif en triphasé. Le sens de transfert des énergies est inversé.

• Génération de dernier secours

S'il est utilisé en générateur de dernier secours, le système de l'invention est accouplé à une éolienne (hélice à pas variable). En cas de perte des générateurs principaux, cet ensemble se déploie à l'extérieur de l'aéronef et est entraîné en rotation par la vitesse de l'air. A ce moment, le système de l'invention assure la disponibilité des systèmes essentiels de l'aéronef.

• Génération auxiliaire

S'il est utilisé en générateur auxiliaire, le système de l'invention peut être utilisé pour alimenter l'aéronef au sol, moteurs éteints. Il peut également servir à démarrer le générateur APU (« Auxiliary Power Unit ») dans un fonctionnement en moteur.

**Revendications**

1. Système de génération électrique à fréquence fixe apte à être disposé en sortie d'un moteur à régime variable, comprenant:

   - un étage primaire (30), qui est un générateur à aimants permanents, qui fournit l'énergie audit système lui permettant d'être autonome,
   - un étage secondaire (21), qui est une excitatrice qui contrôle la magnétisation d'un étage tertiaire,
   - cet étage tertiaire (24), qui est un générateur principal, qui est l'étage de puissance de production de l'énergie électrique,

   en ce que l'étage secondaire (21) et l'étage tertiaire (24) ont leurs rotors (22 et 25) solidaires d'un premier arbre (27), le stator (26) de l'étage tertiaire (24) fournissant la tension de sortie ($V_{sm}$), en ce que l'étage primaire (30) a son rotor (31) solidaire d'un second arbre (33), **caractérisé en ce qu'**il comprend au moins une pompe à huile du circuit de refroidissement (34) qui est solidaire d'un troisième arbre (35), et en ce que ces trois arbres ( 27, 33 et 35) sont entraînés par l'arbre d'entrée (36), qui est l'arbre du moteur, via des engrenages (37, 38, 39 et 40).

2. Système selon la revendication 1, dans lequel le rotor (31) du générateur à aimants permanents (30) est entraîné par l'arbre du moteur (36), et son stator (32) alimente un organe de contrôle extérieur (41).

3. Système selon la revendication 2, dans lequel le stator (23) de l'excitatrice (21) est alimenté par des courants triphasés de fréquence variable provenant d'un onduleur de courant triphasé (43) dudit organe de contrôle extérieur (41).

**4.** Système selon la revendication 3, dans lequel le rotor (25) du générateur principal (24) est solidaire de celui (22) de l'excitatrice (21) et est entraîné par l'arbre du moteur (36), ses bobinages rotoriques triphasés étant interconnectés avec ceux de l'excitatrice.

**5.** Système selon l'une quelconque des revendications précédentes, qui comprend un arbre d'entrée (36) entraîné en régime variable et qui convertit l'énergie mécanique en énergie électrique pour la restituer sous la forme de tensions et de courants triphasés au stator (26) de l'étage principal (24), qui sont distribués ensuite sur un réseau alternatif.

**6.** Système selon l'une quelconque des revendications 1 à 4, dans lequel le stator (26) de l'étage principal (24) est alimenté par des tensions triphasées et le stator (23) de l'excitatrice (21) est court-circuité, l'énergie absorbée étant électrique et l'énergie générée étant mécanique.

**7.** Système selon l'une quelconque des revendications 1 à 4, comprenant un convertisseur statique qui permet de transférer de l'énergie sur le réseau électrique de façon contrôlée.

**8.** Procédé de contrôle du système selon la revendication 5, dans lequel on contrôle la tension ($V_{sm}$) au stator de l'étage principal (24), et qui comprend deux boucles de régulation :

- une boucle de courant d'excitation ;
- une boucle tension de sortie.

**9.** Procédé de contrôle du système selon la revendication 5, dans lequel on contrôle la fréquence du système, qui comprend :

- un boucle de fréquence d'excitation ;
- une boucle fréquence de sortie.

**10.** Utilisation du système de l'invention selon l'une quelconque des revendications 1 à 7, sur un aéronef comme générateur électrique et/ou comme moteur électrique.

**Claims**

**1.** Fixed frequency electrical generation system that can be placed at the variable load engine output, comprising:

- an initial stage (30), which is a permanent magnet generator that provides energy to said system, making it autonomous,
- a secondary stage (21), which is an excitation stage that controls the magnetization of a third stage,
- this third stage (24), which is a main generator, is the electrical energy production power stage,

in that the rotors (22 and 25) of the secondary stage (21) and the third stage (24) are integrated into a first shaft (27), the stator (26) of the third stage (24) supplies the output voltage ($V_{sm}$), in that the rotor (31) of the first stage (30) is integrated into a second shaft (33), **characterized in that** at least one oil pump of the cooling circuit (34) which is integrated into a third shaft (35), and **in that** these three shafts (27, 33 and 35) are driven by the input shaft (36), which is the engine shaft, using gears (37, 38, 39, 40).

**2.** System according to claim 1, in which the rotor (31) of the permanent magnet generator (30) is driven by the shaft of the engine (36), and its stator (32) powers an external control unit (41).

**3.** System according to claim 2, in which the stator (23) of the exciter (21) is powered by variable frequency three-phase currents from a three-phase current inverter (43) of said external control unit (41).

**4.** System according to claim 3, in which the rotor (25) of the main generator (24) is integrated with the rotor (22) of the exciter (21) and is driven by the shaft of the engine (36); its rotor windings are interconnected with those of the exciter.

**5.** System according to any of the previous claims, which includes an input shaft (36) that is driven in variable load and that converts the mechanical energy into electrical energy to rectify it in the form of three-phase voltages and currents to the stator (26) of the main stage (24), which are then distributed over an alternating current network.

6. System according to any of claims 1 to 4, in which the stator (26) of the main stage (24) is powered by three-phase voltages and the stator (23) of the exciter (21) is short-circuited; the energy absorbed is electrical and the energy generated is mechanical.

7. System according to any of claims 1 to 4, that includes a static converter that allows transferring the energy on the electrical network in a controlled manner.

8. System control procedure according to claim 5, in which the voltage ($V_{sm}$) is controlled at the stator of the main stage (24), and that includes two adjustment loops:

    - an excitation current loop;
    - an output voltage loop.

9. System control procedure according to claim 5, in which the frequency of the system is controlled, which includes:

    - an excitation frequency loop;
    - an output frequency loop.

10. Use of the system of the invention according to any of claims 1 to 7, on an aircraft as an electrical generator and/or electrical engine.

**Patentansprüche**

1. Elektrizitätserzeugungssystem mit feststehender Frequenz, das am Ausgang eines Motors mit variabler Drehzahl angeordnet werden kann, umfassend:

    - eine Primärstufe (30), die ein Permanentmagnet-Generator ist, der dem System die Energie liefert, die es unabhängig macht,
    - eine Sekundärstufe (21), die ein Erreger ist, welcher die Magnetisierung einer Tertiärstufe steuert,
    - diese Tertiärstufe (24), die ein Hauptgenerator ist, welcher die Leistungsstufe zur Erzeugung elektrischer Energie ist,

    und wobei die Rotoren (22 und 25) der Sekundärstufe (21) und der Tertiärstufe (24) mit einer ersten Welle (27) fest verbunden bzw. einstückig sind, der Stator (26) der Tertiärstufe (24) die Ausgangsspannung ($V_{sm}$) liefert, der Rotor (31) der Primärstufe (30) mit einer zweiten Welle (33) fest verbunden bzw. einstückig ist, **dadurch gekennzeichnet, dass** es (das System) mindestens eine Ölpumpe des Kühlkreislaufs (34) umfaßt, die mit einer dritten Welle (35) fest verbunden bzw. einstückig ist, und dass diese drei Wellen (27,33 und 35) durch die Eingangswelle (36), die die Motorwelle ist, über Getriebe (37,38,39 und 40) angetrieben sind bzw. werden.

2. System nach Anspruch 1, wobei der Rotor (31) des Permanentmagnet-Generators (30) von der Motorwelle (36) angetrieben wird, und sein Stator (32) ein externes Steuerelement (41) mit Energie versorgt.

3. System nach Anspruch 2, wobei der Stator (23) des Erregerelements (21) von dreiphasigen Strömen mit variabler Frequenz gespeist wird, die von einem Wellenbildungselement dreiphasigen Stroms (43) des externen Steuerelements (41) kommen.

4. System nach Anspruch 3, wobei der Rotor (25) des Hauptgenerators (24) mit demjenigen (22) des Erregerelements (21) fest verbunden bzw. einstückig ist, und von der Welle des Motors (36) angetrieben wird, wobei seine dreiphasigen Rotorwicklungen mit denjenigen des Erregerelements verbunden sind.

5. System nach einem der vorangehenden Ansprüche, das eine Eingangswelle (36) umfaßt, welche mit variabler Drehzahl angetrieben wird und die mechanische Energie in elektrische Energie umwandelt, um diese in Form von Spannungen und dreiphasigen Strömen dem Stator (26) der Hauptstufe (24) bereitzustellen, die anschließend über ein Wechselspannungsnetz übertragen werden.

**6.** System nach einem der Ansprüche 1 bis 4, wobei der Stator (26) der Hauptstufe (24) mit dreiphasigen Spannungen gespeist wird und der Stator (23) des Erregerelements (21) kurzgeschlossen ist, wobei die absorbierte Energie elektrisch ist und die erzeugte Energie mechanisch ist.

**7.** System nach einem der Ansprüche 1 bis 4, umfassend einen statischen Wandler, der die gesteuerte Übertragung der Energie in dem elektrischen Netz ermöglicht.

**8.** Verfahren zur Steuerung des Systems nach Anspruch 5, bei dem die Spannung ($V_{sm}$) am Stator der Hauptstufe (24) gesteuert wird, und das zwei Regelschleifen umfaßt:

- eine ErregerstromsChleife,
- eine Ausgangsspannungsschleife.

**9.** Verfahren zur Steuerung des Systems nach Anspruch 5, bei dem die Frequenz des Systems gesteuert wird, und das umfaßt:

- eine Erregerfrequenzschieife,
- eine Ausgangsfrequenzschleife.

**10.** Verwendung des Systems der Erfindung gemäß einem der Ansprüche 1 bis 7 bei einem Luftfahrzeug als elektrischer Generator und/oder als elektrischer Motor.

# FIG. 1

$f_i$(CW)    36

23    22    26

25

$f_m$(CCW)    27

$f_{se}$(CW)    $f_{rm}$(CCW) = $f_{re}$

# FIG. 3

**FIG. 2**

FIG. 4

FIG. 5

FIG. 6

EP 1 515 426 B1

FIG. 7